# EUROPEAN PATENT SPECIFICATION

(11) **EP 0 722 604 B1**
(45) Date of publication and mention of the grant of the patent: **05.12.2001**
(21) Application number: 95926704.8
(22) Date of filing: 23.06.1995
(51) Int. Cl.: G11B 15/04, G11B 5/584

(54) **TAPE WRITE SERVO**
BANDSCHREIBSERVO
Servo contrôle d' enregistrement sur bande

(30) Priority: 24.06.1994 US 265476
(43) Date of publication of application: 24.07.1996
(73) Proprietor: QUANTUM CORPORATION, Milpitas, CA 95035 (US)
(72) Inventor: SALIBA, George, A., Northborough, MA 01532 (US)
(74) Representative: Goodman, Christopher
(86) International application number: US9508910
(87) International publication number: WO9600442

(56) References cited:
- EP-A- 0 387 104
- JP-B- 45 035 155
- US-A- 4 472 750
- US-A- 5 257 148
- US-A- 5 293 281
- PATENT ABSTRACTS OF JAPAN vol. 8, no. 55 (P-260), 13 March 1984 & JP 58 203620 A (FUJITSU), 28 November 1983,

## Description

This invention relates generally to magnetic storage devices and particularly to servo methods for magnetic tape recording systems.

The constantly increasing operational speeds of digital computers are creating a demand for corresponding increases in the data storage capacities of magnetic tape recording and reproducing systems, while maintaining the special requirements of high speed digital tape systems.

Tape recording and reproducing systems for use as computer data storage devices are required to provide high data transfer rates and to perform a read check on all written data. To satisfy these requirements, conventional tape systems typically employ methods of recording known as linear recording, in which the tracks of data lie parallel to each other and to the edge of the tape, or helical scan recording, in which the tracks of data lie parallel to each other but diagonal to the edge of the tape. The linear recording method offers higher data transfer rates; however, it is desirable to obtain higher data densities while retaining the advantages of this method. Various methods of increasing tape track densities have therefore been pursued.

A method of recording known as azimuth recording has been used in helical scan recording system, and has recently been applied in linear tape systems to increase the track density of these systems. Azimuth recording results in a recorded track pattern in which the magnetization directions of adjacent data tracks lie at different azimuth angles to each other. This method greatly reduces inter-track crosstalk, allowing tracks to be placed closer together. The need for guard band spaces between tracks or wide write heads is thus reduced or eliminated.

Tape track densities are further limited, however, by lateral tape motion, which is the random and unavoidable tendency for a tape to drift in a direction lateral to the direction of tape motion. During a tape write, lateral tape motion causes track directions to deviate from the parallel to the edge of the tape. During a read, lateral tape motion causes misregistration of the read head over the track being read. This misregistration results in read data error. Further error can be introduced by lateral motion of the write head during writing.

Servo tracking techniques have been developed to reduce the effects of tracking error and thus improve the data capacity of tape systems. Known servo techniques, see for instance EP-A-0 387 104 or US-A-5 257 148, vary widely, but most involve methods of dynamically moving the read head to continually re-position it over the written data track. The movement of the read head gap compensates for lateral tape motion during a read. However, lateral tape motion during writing is usually not compensated for with respect to the write head; thus, the distance between tracks is still limited to the magnitude of the lateral tape motion in order to avoid over-writing previously written tracks. Known servo techniques are also costly in that they may require the use of pre-formatted tapes or additional heads.

One method of compensating for lateral tape motion during writing involves embedding low frequency servo bursts within the tracks and then using the servo bursts in an adjacent previously written track to control the lateral position of writing a current track. Writing continues during the reading of a first servo burst, and is discontinued during the reading of a second servo burst. The difference in amplitude received from the servo burst reads indicates the proximity of the write head to the previously written track, and the position of writing can be adjusted in response.

This method, however, requires that the read head be capable of discerning servo information in adjacent tracks. The low frequency nature of the servo bursts renders them discernible, but requires the use of a second read channel in addition to the data read channel. Furthermore, relatively complex hardware must be employed to interrupt writing over some servo bursts while continuing writing over others, and to store the information being read for a later comparison.

It is desirable to provide a simplified, low cost serve tracking mechanism to control the effects of tracking error during writing in order to further increase track density. It is then possible to provide a tape system suited for computer data applications in which the data capacities are greatly increased over those of the prior art.

### Summary of the Invention

In accordance with the present invention, there is provided a method as specified in claim 1 which achieves very high track density through the use of a servo during writing, while satisfying the requirements of computer data applications and a corresponding apparatus as specified in claim 4.

### Brief Description of the Drawings

Figure 1 is a schematic view of a magnetic tape system according to the principles of the invention;
Figure 2 is a schematic representation of a head arrangement of one embodiment of a magnetic head according to the principles of the invention;
Figure 2A is an expanded view of one row of heads on the magnetic head shown in Figure 2;
Figure 3 is an enlarged section of recorded magnetic tape, displaying an azimuth track pattern with embedded servo blocks;
Figure 4 is a detailed view of the components of the head assembly of Figure 1;
Figure 5 is a detailed block diagram of the servo for the tape system of Figure 1;
Figure 6 is a general flow chart of the operation of tape system according to the principles of the invention;
Figure 7 is a detailed flow chart of the write servo block of Figure 6, showing the operation of the write servo according to the principles of the invention;
Figure 8 is a schematic representation of the process of writing an initial track according to the principles of the invention;
Figure 9 is a schematic representation of the head adjustments made according to a type of write servo;
Figure 10 is a schematic representation of the process of writing a second track according to the principles of the invention; and
Figure 11 is a schematic representation of the process of writing a third track utilizing a write servo according to the principles of the invention.

### Detailed Description of the Preferred Embodiment

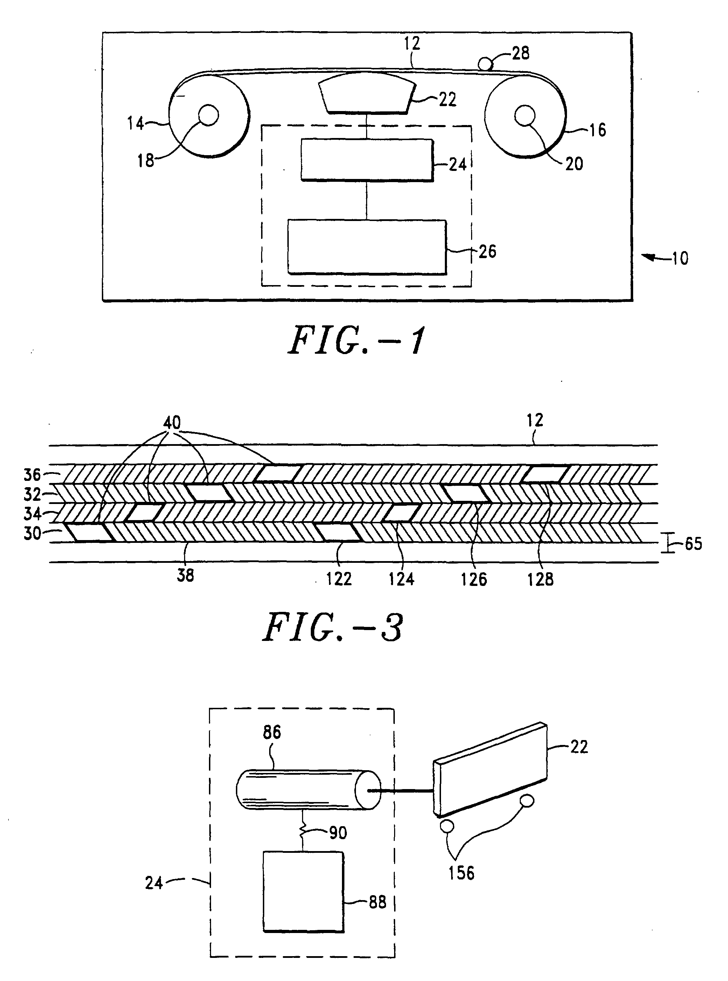

Figure 1 shows a magnetic tape system 10 for azimuth recording at very high track densities on a magnetic tape 12. The tape reels 14 and 16 are mounted on rotatably driven reel drive motors 18 and 20. The reel drive motors 18 and 20 rotate the reels 14 and 16 to move the tape 12 in a forward direction from the reel 14 to the takeup reel 16. As the tape 12 advances, it moves across the magnetic head 22, which writes linear tracks of data onto the tape 12. The magnetic head 22 contains separate write and read head gaps, allowing read checking of written data. When the entire length of the tape 12 has been transferred from the tape reel 14 to the reel 16, the direction of rotation of the reel drive motors 18 and 20 is reversed. The tape 12 now advances across the magnetic head 22 in the reverse direction. As the tape 12 begins to advance in the reverse direction, the magnetic head 22 is stepped in a lateral direction across the tape by the magnetic head assembly 24, enabling the recording of another track of information on the tape 12. A controller 26 provides data to be written by the magnetic head 22, accepts read data from the magnetic head 22, and provides control information to the head assembly 24. The advancement of the tape 12 continues in forward and reverse directions with the magnetic head 22 stepped laterally across the tape 12, resulting in multiple parallel recorded tracks. The position of the magnetic head 22 relative to the lengthwise location on the tape 12 is continuously monitored by position sensing means such as an optical tachometer 28.

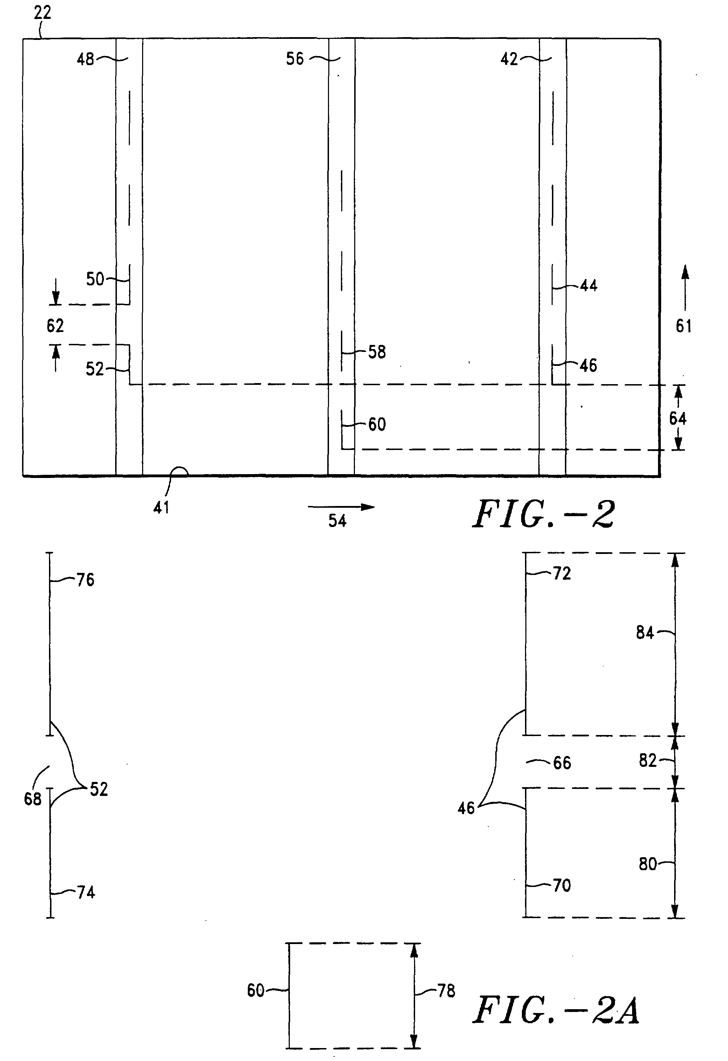

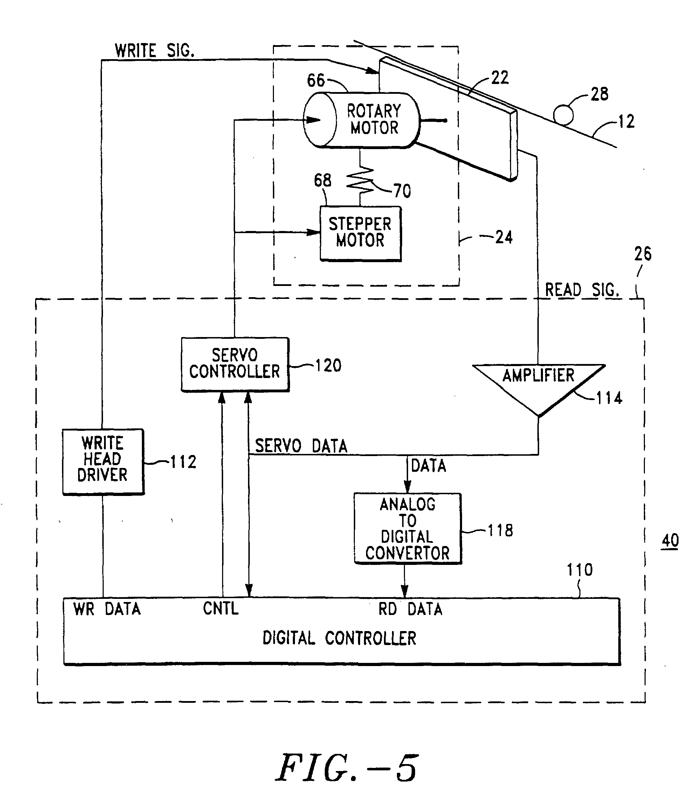

Very high track densities are obtained through the interaction of a magnetic head like the magnetic head 22 of Figure 2, which enables efficient azimuth recording, and a servo, to be described in more detail hereinafter. In Figure 3 there is shown a pattern of recorded tracks 30, 32, 34, and 36 resulting from the use of the tape system 10 of Figure 1.

According to the principles of the invention, the tracks 30 and 32 include alternate data and servo blocks 38 and 40 respectively. The data 38 and servo blocks 40 in tracks 30 and 32 are written at a first azimuth angle θ+ relative to the lateral direction of the tape 12. Tracks 34 and 36 also include alternate data and servo blocks 38 and 40, but the data 38 and servo blocks 40 in tracks 34 and 36 are written at the second azimuth angle θ-. The servo blocks 40 are interspersed in the data 38 of the tracks 30, 32, 34, and 36, at locations as determined by tachometer 28 of Figure 1.

The azimuth recording shown in Figure 3 is achieved through utilization of a magnetic head like the magnetic head 22 of Figure 2. Referring to Figure 2, the surface 41 of the magnetic head 22 contains a first column 42 of write heads including write heads 44 and 46, a second column 48 of write heads including write heads 50 and 52 spaced laterally from the first column as shown by the arrow 54, and a third column 56 of read heads including read heads 58 and 60 situated between the columns 42 and 48. The heads of each column are arranged such that their lengths extend in a lengthwise or longitudinal direction generally parallel to the direction of the arrow 61, as shown in Figure 2. The write heads 44 and 46, the write heads 50 and 52, and the read heads 58 and 60 are arranged such that there is an end-to-end space 62 between them. Further, the corresponding heads in the two columns 42 and 48 are placed such that the write heads 50 and 44 are generally laterally aligned, and the write heads 52 and 46 are generally laterally aligned. The read heads 58 and 60 in the third column 56 are offset in a lengthwise direction and distance 64 from the corresponding write heads in the other two columns 42 and 48. Though in the embodiment shown each column includes four heads, and thus four tracks may be written at once, it is understood that any number of heads can be provided per column.

Referring now to Figure 2A, there is shown an expanded view of the write heads 46 and 52 and the read head 60 of Figure 2. The write heads 46 and 52 include gaps 66 and 68 respectively, separating the write head 46 into a lower write head 70 and an upper write head 72, and likewise separating the write head 52 into a lower write head 74 and an upper write head 76. The write head 46 may be manufactured by methods known in the art as a single core having a gap 66; alternatively, it may be manufactured as two separate cores 70 and 72. The write head 52 may be similarly manufactured.

In one embodiment provided for operation with a standard .5 inch (12.7mm) magnetic tape, the length 78 of the read head 60 is approximately 2.0 millinches +/- .2 millinches (50.8±5.1mm). The length 80 of the lower write heads 70 and 74 is approximately 2.5 millinches +/- .2 millinches (63.5±5.1mm). The length 82 of the gaps 66 and 68 is approximately 1.5 millinches +/- .2 millinches (38.1 ± 5.1mm). The lengths 84 of the upper write heads 72 and 76 is approximately 4 to 5 millinches (100-125mm), and can range anywhere between 2 millinches (50mm) and 8 to 10 millinches (200-250mm). The offset 64 is approximately 100 millinches (2.5mm). With this arrangement a track pitch of approximately 1.5 millinches (38mm) is provided. (Fig. 3, 65). Of course, different dimensions can be employed for operation in different magnetic media environments and to provide different track pitches, the dimensions herein given by reason of example only.

Referring to Figures 1 and 4, magnetic head 22 is mounted on a head assembly 24, shown in dashed lines in Figure 4, for lateral and stepped rotatable movement relative to the tape 12. As shown, the magnetic head 22 is mounted for movement about the output shaft of a rotary motor 86. The rotary motor 86, which receives input from the controller 26, serves to rotatably step the magnetic head 22 relative to the tape 12. A stepper motor 88, which also receives input from controller 26, serves to engage an actuator 90, shown as a linear actuator in Figure 4, for moving the magnetic head 22 in a lateral or widthwise direction across the tape 12. The stepper motor 88 and the linear actuator 90 are used to adjust the track to track position of magnetic head 22. The rotary motor 86 is used for coarse and fine adjustment of the angle of the magnetic head 22 relative to the azimuth angle of a given track.

According to the implementation shown, the stepper motor 88 is capable of 1200 steps/sec at 1.8 degrees/step +/- 5%. The linear actuator 90 can be either a lead screw type, advancing 100 microinches (2,5 µm) per half step, or a microstepper. The rotary motor 86 may be implemented either as a gear type DC motor, a stepper motor, a microstepper, or a torque or rotary motor. Because the tape 12 is stopped when the tape system 10 is not in operation, no sample data is available. It is impractical to recalibrate after every stop; therefore, the gear motor is presently the best suited, as the motor is required to hold a preset angular value for a time without a large amount of drift. Alternatively, the rotary motor can be implemented as a rotary actuator with secondary feedback; for example, an optical sensor, in order to hold angular position. Of course, other methods of stepping and rotating the head 22 may be employed to obtain satisfactory results within the principles of the invention.

The head assembly 24 is used to position the magnetic head 22 with the particular write and read head gap arrangement shown in Figure 2 to provide the resultant recording pattern on the tape 12 shown in Figure 3. According to the principles of the invention, some of the servo blocks 40 residing in the track 32 were written during the writing of a previously written track 30, and are used to control the position of writing of the track 32. The methods of writing the tracks and of controlling the position of writing subsequent tracks will now be described.

Referring to Figure 5, a servo according to the principles of the invention is shown for the tape system 10 of Figure 1. Controller 26 includes a digital controller 110, a write head driver 112, an amplifier 114, an analog to digital convertor 118, and a servo controller 120. The digital controller 110, implemented by means such as a microprocessor, directs the reading and writing of data on the tape 12. To write data, the digital controller 110 outputs digital data to a write head driver 112, which is a digital to analog convertor. The write head driver 112 outputs in turn a write signal to the magnetic head 22. The read signal received by the magnetic head 22 from the tape 12 is amplified by an amplifier 114. The amplified output of the amplifier 114 is in turn coupled to an analog-to-digital convertor 118, the digital output of which is coupled to a read data input of the digital controller 110. The digital controller 110 processes the data and forwards it to a requesting host, such as a mainframe computer system or server. The amplified output of the amplifier 114 is also coupled to a servo controller 120, which recognizes servo information and senses its signal level. Control information, representing such factors as write/read condition and tape direction, is also input to the servo controller 120 from the digital controller 110. Servo controller 120 interprets the servo information from the amplifier 114 and the control information inputs from the digital controller 110, and generates output control signals which are coupled to the rotary motor 66 and the stepper motor 68 of the head assembly 24 for movement of the magnetic head 22 relative to the tape 12.

According to the principles of the invention, the servo system can be used to correct for two different sources of error in head positioning during writing: unwanted lateral motion of the write head during writing, and lateral tape motion (LTM).

Referring back to Figure 3, as the magnetic head 22 writes data along a track, intervals of servo information 122, 124, 126, or 128 are recorded amidst the data. During reading or recording of a given track, the read head 60 (Fig. 2) is not subject to interference or cross talk due to the data recorded in the previously recorded adjacent track because the data is at a different azimuth angle and thus its signal strength is greatly attenuated. Adjacent tracks can therefore be recorded very close together. The servo controller 120 uses the servo information recorded in the tracks to drive the head assembly 24 in order to control the lateral position of the magnetic head 22 while writing tracks, as will be further described.

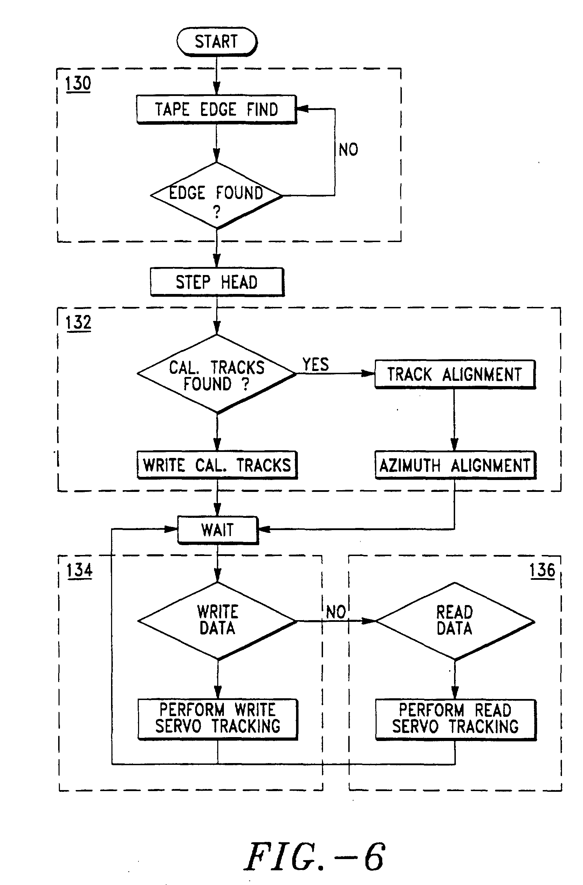

As shown in the flowchart of Figure 6, tape system operation begins with a tape edge find operation, followed by a calibration operation, followed by write and read operations.

Referring to block 130 of Figure 6, tape system operation begins with a tape edge find operation. The magnetic head 22 is initially positioned off the edge of the tape 12. It is stepped toward the tape until it can successfully reproduce, beyond a predetermined noise threshold, data it attempts to write.

After the edge of the tape 12 has been found, the tape 12 is calibrated, as shown in block 132. The servo controller 120 directs the magnetic head 22 to look for calibration tracks which exist if the tape has been written. The magnetic head 22 is stepped a pre-determined distance from the edge of the tape. If the tape is blank, calibration tracks are not found, therefore, calibration tracks are to be written in the calibration area at the beginning of the tape. These calibration tracks are used for lateral alignment with track 0 (the first track written on the tape) and for azimuth alignment which may be necessary between tapes and heads of different systems.

### Write Servo

The description of the write servo describes movement of the magnetic head 22 directionally as shown in the accompanying figures; i.e. "upwards" and "downwards", for purposes of convenience. It is understood that the directions and azimuth angles described can be reversed while maintaining the advantages of the invention.

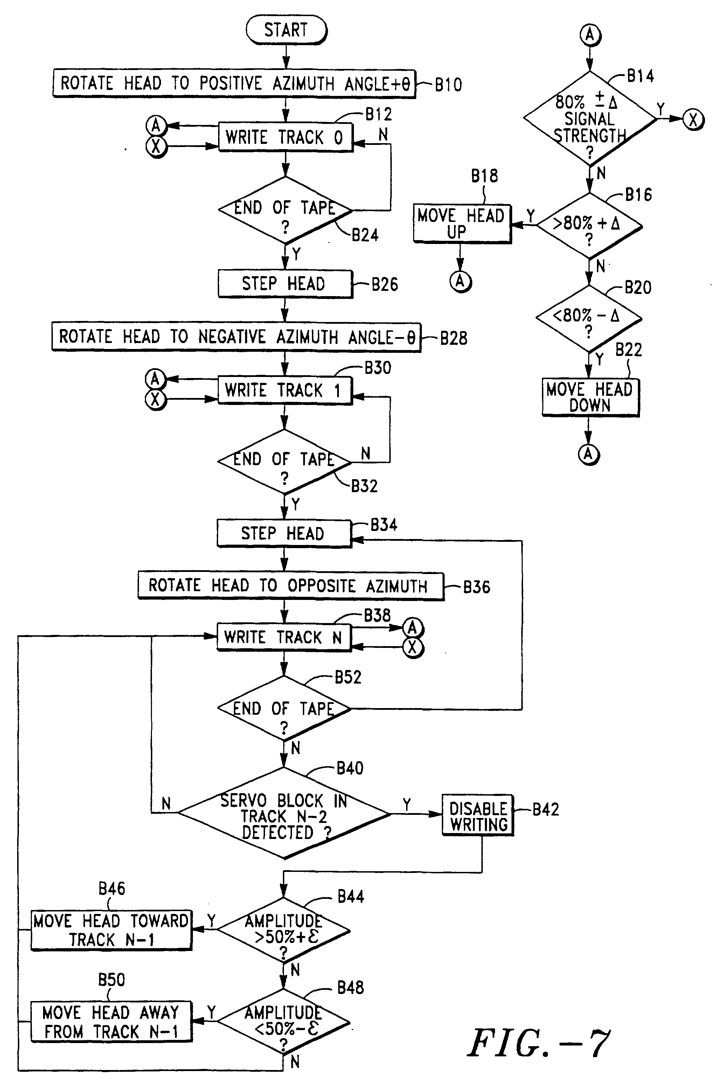

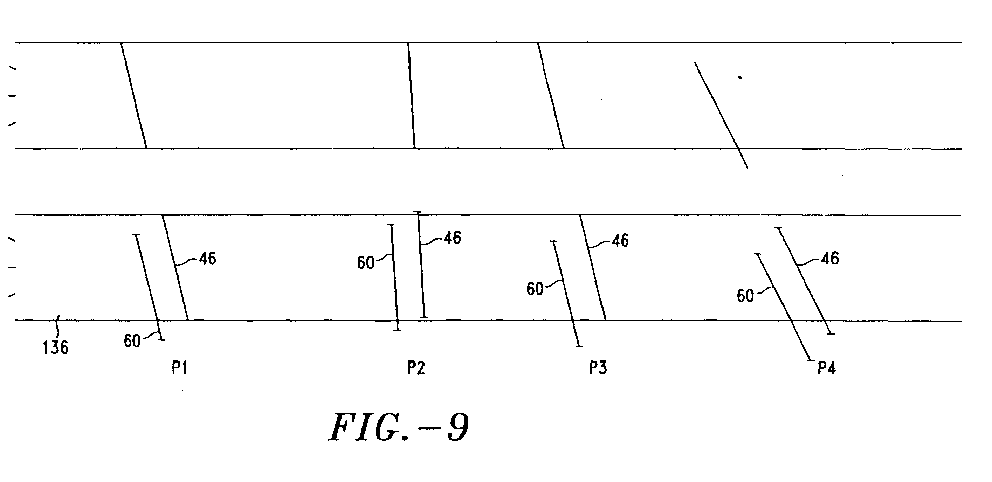

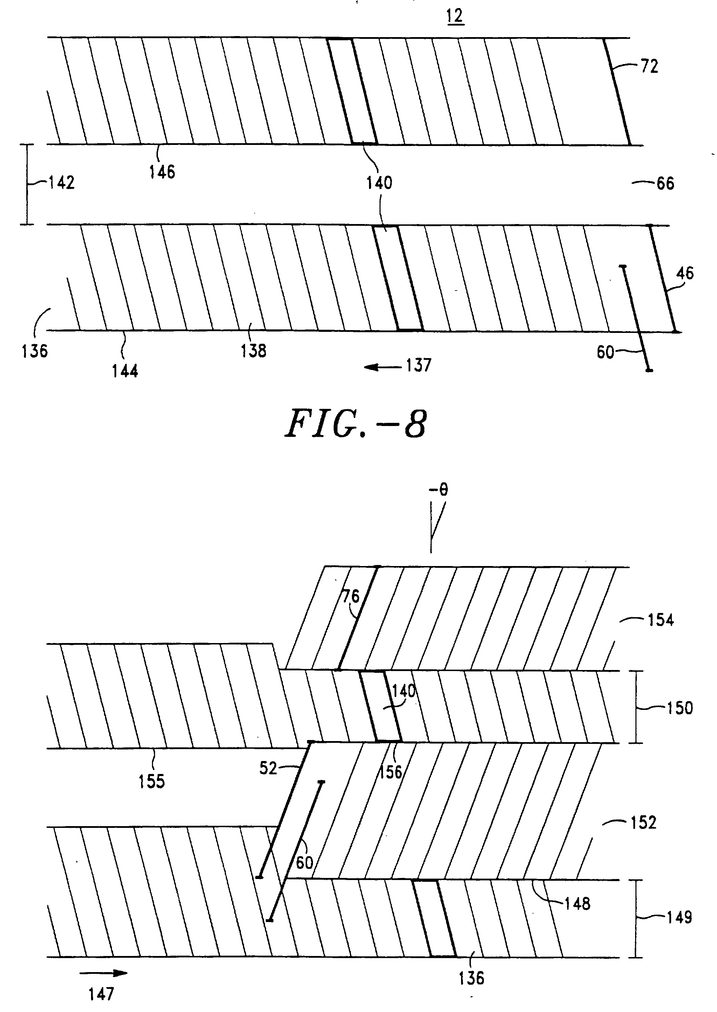

After the tape system 10 has been calibrated, the tape 12 is written. Figure 7, a detailed representation of block 134 of Figure 6, presents a flow diagram of the operation of the write servo. Figures 8 - 11 are views of the positioning of the read head 60 and write heads 46 and 52 of the magnetic head 22 relative to the tracks being written. For ease of description, only one row of heads on the magnetic head 22 is shown reading and writing a single track, though it is understood that the servo according to the invention functions in the same manner with the use of a multi-track head 22 such as that shown in Figure 2.

Referring to Figures 7 and 8, after the track 0 location is determined through the calibration method previously described, a first data track 136 is written open loop, under no servo control, at this lateral position. Accordingly, the magnetic head 22 is rotated to a positive azimuth angle +θ (Fig. 7 B10) against a preset position 156 (shown in Figure 4), bringing the read head 60 and write head 46 into general azimuth alignment, and the tape 12 is driven past the magnetic head 22 in the forward direction 137. Track 136 is written to contain intervals of data 138 and intervals of servo tracking information 140 at the positive azimuth angle θ+ (B12). The servo intervals 140, or blocks, are inserted amidst the track 136 data 138 at pre-determined intervals as indicated by the tachometer 28. Due to the gap 66 in the write head 46, a longitudinal gap 142 resides within the track 136, the gap 142 corresponding to the position gap 66 in the write head 46. The track 136 is thus divided into a lower portion 144 and an upper portion 146.

The servo blocks 140 are placed on the tape at intervals depending on the speed of linear advancement of the tape and the maximum expected frequency of the lateral tape motion, such that the sampling rate provided by the servo blocks is at least twice the lateral tape motion frequency; therefore, the servo block separation is at most V / 2F, where V is tape speed and F is maximum lateral tape motion frequency. In a typical system, if the lateral tape motion frequency is on the order of 2 hz and the tape speed is 100 in/s (2,54m/sec), the sampling frequency provided by the servo blocks must be at least 4 hz, making the maximum separation of the servo blocks 25 inches (0.635m).

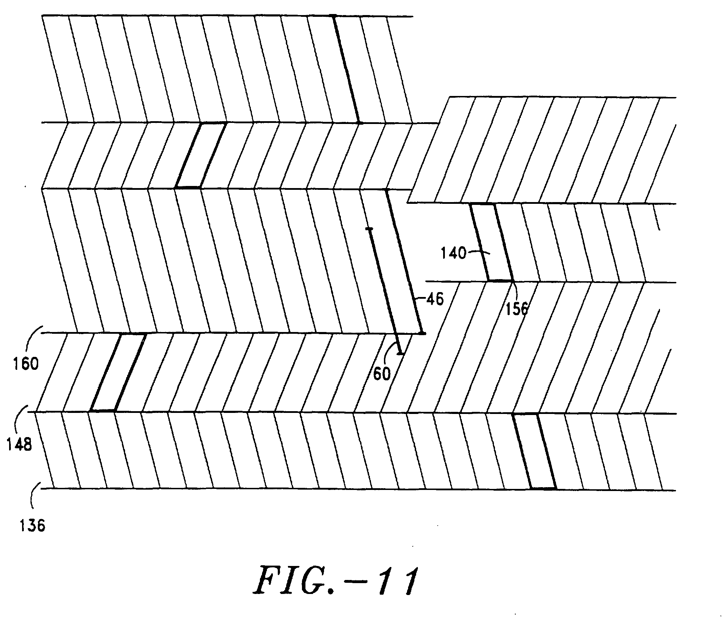

During the writing of any track including track 136, the read head 60 read checks the data written by the write head that is enabled - in this case, the write head 46. The signal strength of the data read can be used by the servo controller 120 (Fig. 5) to determine the position of the write head 46 relative to the read head 60, and thus the servo controller 120 can detect when the write head 46 has moved out of position. For example, referring to Figure 9, when the write head 46 is properly positioned, approximately 4/5 of the read head 60 will overlap the lower portion 70 of the write head 60 and the track 136 as seen at position P1, and the signal strength of the data read as evaluated by the servo controller 120 will be within some differential Δ of 80%. As the write head 46 writes track 136 at a positive azimuth angle θ+, it is possible for the head 22 to rotate out of position such that the write head 46 and read head 60 are positioned as shown at P2. In this case, the signal strength of the data being read by the read head 60 is greater than 80%, since more of the length of the read head 60 overlaps the track 136. The servo controller 120 compares the signal strength received to 80% ± Δ, the Δ chosen being application specific (block B14). In this case, if the signal strength is greater than 80% + Δ (B16), the servo controller 120 will direct that the head 22 be rotated in a counterclockwise direction via the rotary motor 86 (Fig. 4) such that the write head 46 moves up relative to the read head 60 (B18). At position P3, the write head 46 and read head 60 are shown as being properly positioned. That is, 4/5 of the read head 60 overlaps the track 136, so the signal strength of the data will be evaluated as within a Δ of 80%. At position P4, the head 22 is shown to be rotated out of position such that less than half of the length of the read head 60 overlaps the track 136. In this case, if the signal strength of the data being written by the write head 46 is evaluated to be less than 80% - Δ (B20), the servo controller 120 will direct that the head 22 be rotated in a clockwise direction via the rotary motor 86 such that the write head 46 moves down relative to the read head 60 (B22). This servo method can be used during the recording of any track to adjust the position of the write head during writing.

Referring now to Figures 7 and 10, When the end of the tape is reached (Fig. 7 B24), the direction of travel of the tape 12 is reversed to advance in the direction indicated by the arrow 147. The stepper motor 88 activates the linear actuator 90 which moves the magnetic head 22 laterally over the tape 12 to the next track position to be written (B26). The position at which the next track is to be written is chosen such that a portion of the previously written track will be overwritten. According to the preferred embodiment, the next track 148 is positioned such that a track pitch of 1.5 millinches (38mm) results; therefore, approximately 40% of the width of the lower portion 144 of the previously written track 136 will be overwritten, leaving a track 136 width 149 of approximately 1.5 millinches (38 mm) (See position P4 of Fig. 9). The write head 52 is then enabled to write a data pattern. As writing begins, the motor 86 rotatably steps the magnetic head 22 toward a negative position, bringing the write head 52 towards the previously recorded track 136. When the read head 60 receives a signal strength from the data being written by the write head 52 that is within 80% ± Δ of a full track signal strength (blocks B14, B16, B18, B20, B22, and P6), the write head 52 is presumably correctly positioned, and writing of data in track 148 at an azimuth angle θ-commences (block B30). Servo blocks 140 are again written at positions as determined by the tachometer 28 at the azimuth angle θ-.

Like the first track 136, the second track 148 includes a longitudinal gap 150 resulting from the gap 68 in the write head 52, and is thus divided into a lower portion 152 and an upper portion 154. The gap 150 exposes data and servo information that was previously written by the upper portion 72 of the write head 46 during the writing of track 136. The lower portion 152 of track 148 overwrites part of the lower portion 144 of the previously written first track 136, and overlaps the lower edge 155 of the upper portion 146 of the first track 136. Thus, the lower edge 156 of servo information 140 residing in the upper portion 146 of the first track 136 is affected by the position of writing of the lower portion 152 of the second track 148. If the tape moves such that the second track 148 is written lower on the tape, the servo information 140 will be overwritten such that its lower edge 156 will be left lower on the tape. However, if the tape moves such that the second track 148 is written higher on the tape, the servo information 140 will be overwritten such that its edge 156 is higher on the tape. Thus, the lateral position of the lower edge 156 of the servo block 140 is set by the lateral position of writing of the track 148, and as such can be used to adjust the position of writing of subsequent tracks, as will be seen.

Referring to Figures 7 and 11, when the track 148 writing is complete and the end of the tape 12 is reached (B32), the magnetic head 22 is once again stepped upward a distance of about 1.5 millinches (38 mm) (B34). The write head 46 is enabled, and the head 22 is rotated toward the positive azimuth angle θ+ (B36). As was explained for the previous track 148, when the read head 60 receives a signal from the write head 46 at approximately 80% of a full track signal (B14 - B22), the write head 46 is presumably correctly positioned, and writing of data at an azimuth angle θ+ in a track 160 commences (B38). Again, servo blocks like blocks 140 are inserted amidst the track 160 data at pre-determined intervals as indicated by tachometer 28 at the azimuth angle θ+.

It is with the recording of the third track 160 that write servo begins. As can be seen, servo blocks 140 previously recorded in track 136 reside in the path of the write head 46. The lateral position of the lower edges 156 of the servo .blocks 140 depend on the lateral position at which the previous track 148 was written. When the tachometer 28 indicates that a servo block 140 is about to pass under the write head 46 (B40), writing is disabled (B42). The lower edge 156 of the servo block 140 was laterally positioned during the writing of track 148. If the present track 160 is being written such that it is parallel to and abutting the previous track 148, the amplitude of servo information received by the read head 60 as it passes over the servo block 140 will be approximately 50% (according to the head geometries shown). However, if the tape has moved such that, the track 160 is being written laterally spaced from the previously written track 148, more of the read head 60 will overlap the servo block 140, so the amplitude of servo information received by the read head 60 as it passes over the servo block 140 will be proportionately greater than 50%. Alternatively, if the tape has moved such that the track 160 is overwriting the previously written track 148, less of the read head 60 will overlap the servo block 140, so the amplitude of servo information received by the read head 60 as it passes over the servo block 140 will be proportionately less than 50%.

Therefore, by monitoring successive servo blocks left in the path of the track 160 during the writing of track 136, the lower edges of which indicate the position of writing of track 148, the position of writing of track 160 can be continuously controlled such that it abuts track 148 by comparing the amplitude of servo information to a reference amplitude and adjusting the position of the write head 46 accordingly. If the amplitude of servo information read exceeds a reference amplitude plus some tolerance ε (B44) as perceived by the servo controller 120, the position of the write head 46 is adjusted downwards (B46). On the other hand, if the amplitude of servo information read falls below a reference amplitude minus some tolerance ε (B48) as perceived by the servo controller 120, the position of the write head 46 is adjusted upwards (B50). Writing of track 160 then resumes (B38). When the end of the tape is reached (B52), the head 22 is stepped a distance equal to the track pitch, and the next track is recorded at a negative azimuth angle -θ according to the write servo method. The process repeats until the entire tape is written.

Though the previous description employs servo blocks whose positions are indicated by a tachometer 28, servo information could be alternately be provided in the headers of data blocks written on the tape. In addition, it may be desirable to provide a larger step between tracks 136 (track 0) and track 148 (track 1), since no servo operates during the writing of track 0 to compensate for lateral tape motion. For example, the head 22 can be stepped 2.5 millinches (63.5 mm) between tracks 136 and 148, while the head 22 is stepped 1.5 millinches (38.1 mm) between all successive tracks.

It is apparent that, within the scope of the invention, modifications and different arrangements may be made other than as herein disclosed. The present disclosure is merely illustrative, the invention as specified in the appended claims comprehending all variations thereof.

## Claims

1. A method of writing information on a magnetic medium (12) comprising the steps of:
writing (B12) alternate data (38) and servo (40) information in a first longitudinal track (136) on the magnetic medium at a first azimuth angle (θ+), the first longitudinal track including a longitudinal gap (142) such that the first longitudinal track comprises a first lateral portion (144) and a second lateral portion (146); and
writing (B30) alternate data and servo information in a second longitudinal track (148) on the magnetic medium at a second azimuth angle (θ-), the second longitudinal track including a longitudinal gap (150), such that the second longitudinal track comprises a first lateral portion (152) and a second lateral portion (154), the second track being written over the first track such that the first lateral portion (144) of the first track (136) remains on the tape, the longitudinal gap (150) in the second track (148) being positioned such that the alternate data (38) and servo (40) information written in the second lateral portion (146) of the first track (136) is exposed by the longitudinal gap (150) in the second track (148).

2. The method of claim 1 further comprising the steps of:
writing (B38) alternate data (38) and servo (40) information in a third longitudinal track (160) on the magnetic medium at the first azimuth angle (θ+), the third longitudinal track including a longitudinal gap such that the third longitudinal track comprises a first lateral portion and a second lateral portion, the third track being written over the second track (148) such that part of the first lateral portion (152) of the second track remains on the tape, and such that the lower portion of the third track (160) is written at a lateral position overlapping the second lateral portion (154) of the first track;
interrupting writing (B42) at a position coinciding with servo information (140) from the first track (136);
reading the amplitude of servo information;
supplying a reference amplitude indicating a predetermined lateral relationship between tracks;
comparing (B44, B48) the amplitude of servo information with the reference amplitude; and
adjusting (B46, B50) the lateral position of writing in the third track in response to the comparison when said comparison falls outside a tolerance differential (ε) about the reference amplitude to bring the third track (160) into the predetermined lateral relationship with the second track (148).

3. The method of claim 2 wherein the step of adjusting (B46, B50) adjusts the lateral position of writing in the third track (160) to bring the third track into an abutting relationship with the second track (148).

4. Apparatus for writing information on a magnetic medium (12) comprising:
means (22,66) for writing alternate data (38) and servo (40) information in a first longitudinal track (136) on the magnetic medium at a first azimuth angle (θ+), the first longitudinal track including a longitudinal gap (142) such that the first longitudinal track comprises a first lateral portion (144) and a second lateral portion (146); and
means (22,66) for writing alternate data and servo information in a second longitudinal track (148) on the magnetic medium at a second azimuth angle (θ-), the second longitudinal track including a longitudinal gap (150) such that the second longitudinal track comprises a first lateral portion (152) and a second lateral portion (154), the second track being written over the first track such that the first lateral portion (144) of the first track (136) remains on the tape, the longitudinal gap (150) in the second track (148) being positioned such that the alternate data (38) and servo (40) information written in the second lateral portion (146) of the first track (136) is exposed by the longitudinal gap (150) in the second track (148).

5. The apparatus of claim 4 further comprising:
means for writing alternate data (38) and servo (40) information in a third longitudinal track (160) on the magnetic medium at the first azimuth angle (θ+), the third longitudinal track including a longitudinal gap such that the third longitudinal track comprises a first lateral portion and a second lateral portion, the third track being written over the second track (148) such that part of the first lateral portion (152) of the second track remains on the tape, and such that the lower portion of the third track (160) is written at a lateral position overlapping the second lateral portion of the first track;
means (110,112) for interrupting writing (B42) at a position coinciding with servo information (140) from the first track (136);
means (114,118) for reading the amplitude of servo information;
means for supplying a reference amplitude indicating a predetermined lateral relationship between tracks;
means for comparing the amplitude of servo information with the reference amplitude; and
means (120,68) for adjusting the lateral position of writing in the third track in response to the comparison when said comparison falls outside a tolerance differential ε about the reference amplitude to bring the third track (160) into the predetermined lateral relationship with the second track (148).

6. The apparatus of claim 5 wherein the means (120,68) for adjusting adjusts the lateral position of writing in the third track (160) to bring the third track into an abutting relationship with the second track (148).

7. The apparatus of claim 4 further including:
means (58,60) for reading following the means for writing, the means for reading laterally positioned to overlap part of the longitudinal track;
means (120,68) for adjusting the lateral position of the means for writing in a first lateral direction when the means for reading reads data having a signal strength greater than a reference signal strength plus a tolerance value; and
means (120,68) for adjusting the lateral position of the means for writing in the opposite lateral direction when the means for reading reads data having a signal strength less than a reference signal strength plus a tolerance value.

8. The apparatus of claim 7 wherein the means for writing is a write head (50,52) on a magnetic head 22, and wherein the means for reading is a read head (58,60) on the magnetic head (22), the read head being positioned on the magnetic head such that the read head is laterally spaced from the write head and the length of the read head partially overlaps the length of the write head.

9. The method of claim 1 further comprising:
immediately following the of writing of alternate data and servo information, laterally positioning a read head to overlap part of the written longitudinal track;
adjusting (B46) the lateral position of a means for writing said longitudinal tracks in a first lateral direction when the read head reads data having a signal strength greater than a reference signal strength plus a tolerance value; and
adjusting (B50) the lateral position of the means for writing said longitudinal tracks in the opposite lateral direction when the read head reads data having a signal strength less than a reference signal strength plus a tolerance value.

## Patentansprüche

1. Verfahren zum Schreiben von Information auf einem Magnetmedium (12) mit den Schritten:
Schreiben (B12) abwechselnd Daten (38) und Servoinformation (40) in eine erste longitudinale Spur (136) auf dem Magnetmedium bei einem ersten Azimutwinkel (θ+), wobei die erste longitudinale Spur einen longitudinalen Abstand (142) aufweist, so daß die erste longitudinale Spur einen ersten Seitenabschnitt (144) und einen zweiten Seitenabschnitt (146) umfaßt; und
Schreiben (B30) abwechselnd Daten und Servoinformation in eine zweite longitudinale Spur (148) auf dem Magnetmedium bei einem zweiten Azimutwinkel (θ-), wobei die zweite longitudinale Spur eine longitudinalen Abstand (150) aufweist, so daß die zweite longitudinale Spur einen ersten Seitenabschnitt (152) und einen zweiten Seitenabschnitt (154) umfaßt, wobei die zweite Spur über die erste Spur geschrieben wird, so daß der erste Seitenabschnitt (144) der ersten Spur (136) auf dem Band bleibt, wobei der longitudinale Abstand (150) in der zweiten Spur (148) so positioniert ist, daß die in den zweiten Seitenabschnitt (146) der ersten Spur (136) abwechselnd geschriebenen Daten (38) und Servoinformation (40) durch den longitudinalen Abstand (150) in der zweiten Spur (148) freiliegen.

2. Verfahren gemäß Anspruch 1, ferner mit den Schritten:
Schreiben (B38) abwechselnd Daten (38) und Servoinformation (40) in eine dritte longitudinale Spur (160) auf dem Magnetmedium bei dem ersten Azimutwinkel (θ+), wobei die dritte longitudinale Spur einen longitudinalen Abstand aufweist, so daß die dritte longitudinale Spur einen ersten Seitenabschnitt und einen zweiten Seitenabschnitt umfaßt, wobei die dritte Spur über die zweite Spur (148) geschrieben wird, so daß ein Teil des ersten Seitenabschnitts (152) der zweiten Spur auf dem Band bleibt und so daß der untere Abschnitt der dritten Spur (160) an einer seitlichen Position geschrieben wird, die den zweiten Seitenabschnitt (154) der ersten Spur überlappt;
Unterbrechen des Schreibens (B42) bei einer Position, die mit der Servoinformation (140) von der ersten Spur (136) koinzidiert;
Lesen der Amplitude der Servoinformation;
Liefern einer Bezugsamplitude, die eine vorbestimmte seitliche Beziehung zwischen den Spuren angibt;
Vergleichen (B44, B48) der Amplitude der Servoinformation mit der Bezugsamplitude; und
Einstellen (B46, B50) der seitlichen Position des Schreibens in der dritten Spur als Antwort auf den Vergleich, wenn der Vergleich außerhalb eines Toleranzdifferentials (ε) um die Bezugsamplitude fällt, um die dritte Spur (160) in die vorbestimmte seitliche Beziehung mit der zweiten Spur (148) zu bringen.

3. Verfahren gemäß Anspruch 2, bei dem der Schritt des Einstellens (B46, B50) die seitliche Position des Schreibens in der dritten Spur (160) einstellt, um die dritte Spur in eine angrenzende Beziehung mit der zweiten Spur (148) zu bringen.

4. Vorrichtung zum Schreiben von Information auf einem Magnetmedium (12) mit:
Mittel (22, 66) zum Schreiben abwechselnd Daten (38) und Servoinformation (40) in einer ersten longitudinalen Spur (136) auf dem Magnetmedium bei einem ersten Azimutwinkel (θ+), wobei die erste longitudinale Spur einen longitudinalen Abstand (142) aufweist, so daß die erste longitudinale Spur einen ersten Seitenabschnitt (144) und einen zweiten Seitenabschnitt (146) umfaßt; und
Mittel (22, 66) zum Schreiben abwechselnd Daten und Servoinformation in eine zweite longitudinale Spur (148) auf dem Magnetmedium bei einem zweiten Azimutwinkel (θ-), wobei die zweite longitudinale Spur einen longitudinalen Abstand (150) aufweist, so daß die zweite longitudinale Spur einen ersten Seitenabschnitt (152) und einen zweiten Seitenabschnitt (154) umfaßt, wobei die zweite Spur über die erste Spur geschrieben wird, sodaß der erste Seitenabschnitt (144) der ersten Spur (136) auf dem Band bleibt, wobei der longitudinale Abstand (150) in der zweiten Spur (148) so positioniert wird, daß die in den zweiten Seitenabschnitt (146) der ersten Spur (136) geschriebenen abwechselnden Daten (38) und Servoinformation (40) durch den longitudinalen Abstand (150) in der zweiten Spur (148) freiliegen.

5. Vorrichtung gemäß Anspruch 4 ferner mit:
Mittel zum Schreiben abwechselnd Daten (38) und Servoinformation (40) in eine dritte longitudinalen Spur (160) auf dem Magnetmedium bei einem ersten Azimutwinkel (θ+), wobei die dritte longitudinale Spur einen longitudinalen Abstand aufweist, so daß die dritte longitudinale Spur einen ersten Seitenabschnitt und einen zweiten Seitenabschnitt umfaßt, wobei die dritte Spur über die zweite Spur (148) geschrieben wird, so daß ein Teil des ersten Seitenabschnitts (152) der zweiten Spur auf dem Band bleibt, und so daß der untere Abschnitt der dritten Spur (160) an einer Seitenposition geschrieben wird, die den zweiten Seitenabschnitt der ersten Spur überlappt;
Mittel (110, 112) zum Unterbrechen des Schreibens (B42) bei einer Position, die mit der Servoinformation (140) von der ersten Spur (136) koinzidiert;
Mittel (114, 118) zum Lesen der Amplitude der Servoinformation;
Mittel zum Liefern einer Bezugsamplitude, die eine vorbestimmte seitliche Beziehung zwischen Spuren angibt;
Mittel zum Vergleichen der Amplitude der Servoinformation mit der Bezugsamplitude; und
Mittel (120, 68) zum Einstellen der seitlichen Position des Schreibens in der dritten Spur als Antwort auf den Vergleich, wenn der Vergleich außerhalb eines Toleranzdifferentials ε um die Bezugsamplitude fällt, um die dritte Spur (160) in die vorbestimmte seitliche Beziehung mit der zweiten Spur (148) zu bringen.

6. Vorrichtung gemäß Anspruch 5, bei der das Mittel (120, 68) zum Einstellen die seitlichen Position des Schreibens in der dritten Spur (160) einstellt, um die dritte Spur in eine angrenzende Beziehung mit der zweiten Spur (148) zu bringen.

7. Vorrichtung gemäß Anspruch 4, ferner mit:
Mittel (58, 60) zum Lesen nach dem Mittel zum Schreiben, wobei das Mittel zum Lesen seitlich positioniert ist, um einen Teil der longitudinalen Spur zu überlappen;
Mittel (120, 68) zum Einstellen der seitlichen Position des Mittels zum Schreiben in einer ersten seitlichen Richtung, wenn das Mittel zum Schreiben Daten liest, die eine Signalstärke aufweisen, die größer als eine Bezugssignalstärke plus einem Toleranzwert ist; und
Mittel (120, 68) zum Einstellen der seitlichen Position des Mittels zum Schreiben in der entgegengesetzten seitlichen Richtung, wenn das Mittel zum Lesen Daten liest, die eine geringere Signalstärke als eine Bezugssignalstärke plus einem Toleranzwert aufweisen.

8. Vorrichtung gemäß Anspruch 7, bei der das Mittel zum Schreiben ein Schreibkopf (50, 52) an einem Magnetkopf (22) ist und bei der das Mittel zum Lesen ein Lesekopf (58, 60) an dem Magnetkopf (22) ist, wobei der Lesekopf an dem Magnetkopf so positioniert ist, daß der Lesekopf seitlich von dem Schreibkopf beabstandet ist und die Länge des Lesekopfs teilweise die Länge des Schreibkopfs überlappt.

9. Verfahren gemäß Anspruch 1, ferner mit:
sofort nach dem Schreiben abwechselnd Daten und Servoinformation seitliches Positionieren eines Lesekopfs, um einen Teil der geschriebenen longitudinalen Spur zu überlappen;
Einstellen (B46) der seitlichen Position eines Mittels zum Schreiben der longitudinalen Spuren in einer ersten seitlichen Richtung, wenn der Lesekopf Daten liest, die eine größere Signalstärke als eine Bezugssignalstärke plus einem Toleranzwert aufweisen; und
Einstellen (B50) der seitlichen Position des Mittels zum Schreiben der longitudinalen Spuren in der entgegengesetzten seitlichen Richtung, wenn der Lesekopf Daten liest, die eine Signalstärke geringer als eine Bezugssignalstärke plus einen Toleranzwert aufweisen.

## Revendications

1. Procédé d'enregistrement d'informations sur un médium magnétique (12) comprenant les étapes de :
enregistrement (B 12) de données alternées (38) et d'informations servo contrôlées (40) sur une première piste longitudinale (136) sur le médium magnétique à un premier angle d'azimut (θ+), la première piste longitudinale comprenant un espace longitudinal (142) de sorte que la première piste longitudinale comprend une première partie latérale (144) et une seconde partie latérale (146) ; et
enregistrement (B 30) de données alternées et d'informations servo contrôlées sur une seconde piste longitudinale (148) sur le médium magnétique à un second angle d'azimut (θ-), la seconde piste longitudinale comprenant un espace longitudinal (150), de sorte que la seconde piste longitudinale comprend une première partie latérale (152) et une seconde partie latérale (154), la seconde piste étant enregistrée sur la première piste de sorte que la première partie latérale (144) de la première piste (136) reste sur la bande, l'espace longitudinal (150) de la seconde piste (148) étant positionné de telle sorte que les données alternées (38) et les informations servo contrôlées (40) enregistrées sur la seconde partie latérale (146) de la première piste (136) sont découvertes par l'espace longitudinal (150) de la seconde piste (148).

2. Procédé selon la revendication 1 comprenant en outre les étapes de :
enregistrement (B 38) de données alternées (38) et d'informations servo contrôlées (40) sur une troisième piste longitudinale (160) sur le médium magnétique à un premier angle d'azimut (θ+), la troisième piste longitudinale comprenant un espace longitudinal de sorte que la troisième piste longitudinale comprend une première partie latérale et une seconde partie latérale, la troisième piste étant enregistrée sur la seconde piste (148) de sorte qu'une partie de la première partie latérale (152) de la seconde piste reste sur la bande, et de sorte que la partie inférieure de la troisième piste (160) est enregistrée dans une position latérale qui recouvre la seconde partie latérale (154) de la première piste ;
interruption de l'enregistrement (B 42) dans une position coïncidant avec des informations servo contrôlées (140) en provenance de la première piste (136) ;
lecture de l'amplitude des informations servo contrôlées ;
fourniture d'une amplitude de référence indiquant une relation latérale prédéterminée entre les pistes ;
comparaison (B 44, B 48) de l'amplitude des informations servo contrôlées avec l'amplitude de référence ; et
ajustement (B 46, B 50) de la position latérale d'enregistrement sur la troisième piste en réponse à la comparaison lorsque ladite comparaison se situe en dehors d'un différentiel de tolérance (ε) à proximité de l'amplitude de référence afin d'amener la troisième piste (160) dans la relation latérale prédéterminée avec la seconde piste (148).

3. Procédé selon la revendication 2 dans lequel l'étape d'ajustement (B 46, B 50) ajuste la position latérale d'enregistrement de la troisième piste (160) afin d'amener la troisième piste dans une relation en butée avec la seconde piste (148).

4. Appareil destiné à enregistrer des informations sur un médium magnétique (12) comprenant :
des moyens (22, 66) destinés à enregistrer des données alternées (38) et des informations servo contrôlées (40) sur une première piste longitudinale (136) sur le médium magnétique à un premier angle d'azimut (θ+), la première piste longitudinale comprenant un espace longitudinal (142) de sorte que la première piste longitudinale comprend une première partie latérale (144) et une seconde partie latérale (146) ; et
des moyens (22, 66) destinés à enregistrer des données alternées et des informations servo contrôlées sur une seconde piste longitudinale (148) sur le médium magnétique à un second angle d'azimut (θ-), la seconde piste longitudinale comprenant un espace longitudinal (150) de sorte que la seconde piste longitudinale comprend une première partie latérale (152) et une seconde partie latérale (154), la seconde piste étant enregistrée sur la première piste de sorte que la première partie latérale (144) de la première piste (136) reste sur la bande, l'espace longitudinal (150) de la seconde piste (148) étant positionné de telle sorte que les données alternées (38) et les informations servo contrôlées (40) enregistrées sur la seconde partie latérale (146) de la première piste (136) sont découvertes par l'espace longitudinal (150) de la seconde piste (148).

5. Appareil selon la revendication 4 comprenant en outre :
des moyens destinés à enregistrer des données alternées (38) et d'informations servo contrôlées (40) sur une troisième piste longitudinale (160) sur le médium magnétique au premier angle d'azimut (θ+), la troisième piste longitudinale comprenant un espace longitudinal de sorte que la troisième piste longitudinale comprend une première partie latérale et une seconde partie latérale, la troisième piste étant enregistrée sur la seconde piste (148) de sorte qu'une partie de la première partie latérale (152) de la seconde piste reste sur la bande, et de sorte que la partie inférieure de la troisième piste (160) est enregistrée dans une position latérale qui recouvre la seconde partie latérale de la première piste ;
des moyens (110, 112) destinés à interrompre l'enregistrement (B 42) dans une position coïncidant avec des informations servo contrôlées (140) en provenance de la première piste (136) ;
des moyens (114, 118) destinés à lire l'amplitude des informations servo contrôlées ;
des moyens destinés à fournir une amplitude de référence indiquant une relation latérale prédéterminée entre les pistes ;
des moyens destinés à comparer l'amplitude des informations servo contrôlées avec l'amplitude de référence ; et
des moyens destinés à ajuster la position latérale d'enregistrement sur la troisième piste en réponse à la comparaison lorsque ladite comparaison se situe en dehors d'un différentiel de tolérance (ε) à proximité de l'amplitude de référence afin d'amener la troisième piste (160) dans la relation latérale prédéterminée avec la seconde piste (148).

6. Appareil selon la revendication 5 dans lequel les moyens d'ajustement (120, 68) ajustent la position latérale d'enregistrement sur la troisième piste (160) afin d'amener la troisième piste dans une relation en butée avec la seconde piste (148).

7. Appareil selon la revendication 4 comprenant en outre :
des moyens (58, 60) de lecture à la suite des moyens d'enregistrement, les moyens de lecture étant positionnés latéralement afin de recouvrir une partie de la piste longitudinale ;
des moyens (120, 68) destinés à ajuster la position latérale des moyens d'enregistrement dans une première direction latérale lorsque les moyens de lecture lisent des données ayant une force de signal supérieure à une force de signal de référence plus une valeur de tolérance ; et
des moyens (120, 68) destinés à ajuster la position latérale des moyens d'enregistrement dans la direction latérale opposée lorsque les moyens de lecture lisent des données ayant une force de signal inférieure à une force de signal de référence plus une valeur de tolérance.

8. Appareil selon la revendication 7 dans lequel les moyens d'enregistrement sont une tête d'enregistrement (50, 52) sur une tète magnétique (22), et dans lequel les moyens de lecture sont une tête de lecture (58, 60) sur la tête magnétique (22), la tête de lecture étant positionnée sur la tête magnétique de sorte que la tête de lecture est séparée latéralement de la tête d'enregistrement et que la longueur de la tête de lecture recouvre en partie la longueur de la tête d'enregistrement.

9. Procédé selon la revendication 1 comprenant en outre :
le positionnement latéral, immédiatement à la suite de l'enregistrement de données alternées et d'informations servo contrôlées, d'une tête de lecture afin de recouvrir une partie de la piste longitudinale enregistrée ;
l'ajustement (B 46) de la position latérale des moyens d'enregistrement desdites pistes longitudinales dans une première direction latérale lorsque la tête de lecture lit des données ayant une force de signal supérieure à une force de signal de référence plus une valeur de tolérance ; et
l'ajustement (B 46) de la position latérale des moyens d'enregistrement desdites pistes longitudinales dans la direction latérale opposée lorsque la tête de lecture lit des données ayant une force de signal inférieure à une force de signal de référence plus une valeur de tolérance.
